Europäisches Patentamt

European Patent Office

Office européen des brevets

(19)

(11) Publication number: 0 246 628 B1

# EUROPEAN PATENT SPECIFICATION

(45) Date of publication of patent specification: 19.06.91   (51) Int. Cl.⁵: **A23G 3/00**

(21) Application number: 87107325.0

(22) Date of filing: 20.05.87

The file contains technical information submitted after the application was filed and not included in this specification

(54) **Gum for use in confectionery.**

(30) Priority: 22.05.86 DK 2407/86

(43) Date of publication of application:
25.11.87 Bulletin 87/48

(45) Publication of the grant of the patent:
19.06.91 Bulletin 91/25

(84) Designated Contracting States:
BE CH DE ES FR GB IT LI NL SE

(56) References cited:
FR-A- 2 283 907
US-A- 3 367 784

JAPAN PATENT INFORMATION ORGANIZA-
TION, vol. 10, no. 245, page 80, 2000621

(73) Proprietor: A/S Kobenhavns Pektinfabrik

DK-4623 Lille Skensved(DK)

(72) Inventor: **Buhl, Steen**
**Mantuavej 15**
**DK-2300 Copenhagen S.(DK)**
Inventor: **Rolin, Claus**
**Aldershvilevej 147**
**DK-2880 Bagsvaerd(DK)**
Inventor: **Christensen, Steen Hojgaard**
**Baekkeskovvej 47**
**DK-2700 Bronshoj(DK)**

(74) Representative: **Patentanwälte Leinweber &**
**Zimmermann**
**Rosental 7/II Aufg.**
**W-8000 München 2(DE)**

## Description

The present invention relates to a gum based on pectin and for use in confectionery and to confectionery, in particular pastilles, containing it.

One of the most popular gums is gum arabic which is widely used in various types of confectionery, such as liquorice pastilles, fruit pastilles, wine gum and chewing gum. Gum arabic exhibits a number of advantageous properties, the most important being that it is soluble in water, that the solution thus formed has a low viscosity, that the solution does not gel at low pH values, that a solution of gum arabic can be moulded without tail formation at a temperature of about 65°C and that confectionery, such as pastilles, containing gum arabic has a pleasant gum-like texture.

Gum arabic is derived from the sap of the acacia tree and the supply and price of gum arabic are highly dependent on climatic conditions.

A serious drought in the countries in Africa (Sudan, Etiopia, Senegal and Nigeria) which are the main producers of gum arabic recently has reduced the supply of gum arabic and caused substantial price increases during the later years.

Therefore, it has been attempted to develop gums which are capable of wholly or partially replacing gum arabic. An example of such a gum is modified starch which, however, does not possess all the advantageous properties of gum arabic. Thus, modified starch does not produce a satisfactory texture and pastilles containing modified starch tend to adhere to the palate and the teeth. Furthermore, modified starch reduces the effect of added flavour additives and cannot be used in sugar-free products.

It is well known that a firm gum-like structure can be imparted to some types of confectionery, such as wine gum, by using gelatine containing a small amount of pectin as gum component.

It is also well known that by incorporating pectin in gelatine, the texture of the resulting product is improved, and that by using pecting alone for the preparation of pastilles the texture of such pastilles will be unsatisfactory.

A serious drawback of the well known mixtures of gelatine and pectin is that the viscosity of the aqueous solutions prepared therefrom is too high to permit them to be used in the conventional moulding of pastilles and that the viscosity cannot be reduced by using smaller amounts of gelatine and pectin because the desired texture then cannot be obtained. It is further known that a mixture of the components used for the preparation of for example pastilles, i.e. gum, water, flavour additives, such as liquorice powder and ammonium chloride, buffer, sugar and glucose syrup, should preferably have a maximum viscosity of 3 000 mPa·s at 65°C and a dry matter content of 65°C Brix measured with a refractometer.

From FR-A-22 83 907 an amidated pectin is known having a degree of amidation of from 3 to 6 % and a degree of esterification of from 60 to 70 %.

Surprisingly, it has been found that the drawbacks of the prior art mixtures of gelatine and pectin and of the prior art amidated pectin gelling agents can be eliminated by using a special type of pectin which can be used to wholly or partially replace gum arabic.

The object of the present invention is to replace gum arabic which imparts a firm gum-like texture to some confectionery products while avoiding the drawbacks of known gelatine-based substitutes.

Subject-matter of the present invention is a gum based on pectin and for use in confectionery, which is characterized in that it consists wholly or partially of amidated pectin with a degree of amidation of from 5 to 25 %, a degree of esterifiaction of from 50 to 75 % and an average molecular weight of from 15 000 to 75 000.

The use of the above mentioned amidated pectin instead of the known mixture of pectin and gelatine results in a substantial reduction of viscosity, viz. to a viscosity below the above mentioned viscosity of 3 000 mPa·s (3 000 cP) at 65°C and a dry matter content of 65° Brix measured with a refractometer.

According to a preferred embodiment of the present invention the average degree of amidation of the amidated pectin is from 5 to 20 % and the degree of esterifiaction of the amidated pectin is preferably from 55 to 70 %.

A further subject-matter of the present invention is a confectionery containing a gum based on pectin which is characerized in that the gum consist wholly or partially of amidated pectin with a degree of amidation of from 5 to 25 %, a degree of esterification of from 50 to 75 % and an average molecular weight of from 15 000 to 75 000.

The gum is contained in the confectionery of the present invention preferably in an amount of from 3 to 15 % by weight.

According to a further preferred embodiment of the present invention the gum also comprises gum arabic, gelatine or a mixture thereof.

In the following the present invention is explained more in detail.

2

As mentioned above, the amidated pectin used according to the present invention has a degree of amidation of from 5 to 25 %, preferably 5 to 20 %, a degree of esterification of from 50 to 75 %, preferably 55 to 70 %, and an average molecular weight of from 15 000 to 75 000.

At higher degrees of amidation, the pectin will react with $Ca^{++}$ ions, thus causing the viscosuty to increase. If the degree of amidation exceeds 25 %, the pectin will normally gel at the moulding temperature, for example 65° C.

Furthermore, at increasing degrees of amidation the texture becomes harder. The selection of degree of amidation is consequently a compromise between viscosity and texture. A preferred range of the degree of amidation is from 5 to 20 %.

As mentioned above the degree of esterification of the pectin should be 50 % to 75 %. The degree of esterification is the extent to which the galacturonic acid groups in the pectin have been esterified with methyl alcohol.

Pectins with a degree of esterifiaction of below 50 % are relatively strongly reactive which means that they tend to react with calcium ions which for example are present in liquorice powder and to produce an undesired increase of viscosity. On the other hand, a high degree of esterification, i.e. above about 75 %, has the undesired effect that the pectin tends to gel and to produce a grainy and consequently inferior texture.

Thus, the selection of degree of esterification is a compromise between viscosity and texture. It is preferred to use pectin having a degree of esterification of from 55 to 70%

A special advantage of the gum according to the invention is that it results in a final product having the desired properties even if used in relatively small amounts, viz. in amounts of from 3 to 15 and more particularly from 4 to 10% by weight. For comparison purposes it should be mentioned that gum arabic normally is used in corresponding final products in an amount of about 35% by weight.

The invention also relates to confectionery containing the gum according to the invention.

The confectionery according to the invention is characterized in that the gum consists wholly or partially of amidated pectin with a degree of amidation of from 5 to 25%, a degree of esterification of 50% to 75% and an average molecular weight of from 15,000 to 75,000.

The confectionery according to the invention may optionally contain a mixture of the gum according to the invention and gelatine, gum arabic or a mixture thereof.

The invention will now be described in further detail with reference to the following example which illustrates the preparation of pastilles containing the gum according to the invention, optionally in admixture with gum arabic, and which illustrates various properties of such pastilles compared with prior art pastilles.

EXAMPLE

a) Preparation of pectin.

2.50 kg dry citrus peels were extracted for 4 hours with 50 l demineralized water at a temperature of 90° C and the mixture was acidified to a pH value of 2.0 with nitric acid at the start of the extraction. Insoluble components were removed by filtration. The pH value of the filtrate was adjusted to 1.7 with nitric acid. The filtrate thus obtained was ion exchanged with a cation exchanger (Amberlite ® 120) to remove calcium ions. The pectin was subsequently precipitated in 80% isopropanol.

The precipitated pectin was slurried in 15 l 80% isopropanol at 0° C. 25% Ammonia were added to obtain a concentration of 3. 4% by weight of ammonia. The pectin was left to stand for 60 minutes, washed with 60% isopropanol and the pH value adjusted to 3.3-3.6 with acid. Subsequently, the pectin was separated, pressed and dried and finally it was milled and sieved. The pectin thus obtained, pectin A, had the following properties:

| | |
|---|---|
| Degree of esterification (DE): | 56.6% |
| Degree of amidation (DA): | 9.3% |
| Average molecular weight (MW): | 52,000. |

The following pectins, B-E, were prepared in an analogous manner:

|  | B | C | D | E |
|---|---|---|---|---|
| DE, % | 67.7 | 65.4 | 57.3 | 64.1 |
| DA, % | 8.0 | 10.9 | 14.5 | 12.6 |
| Pure pectin, % | 93.9 | 94.0 | 96.6 | 97.8 |
| pH of 1% solution | 4.60 | 4.60 | 4.60 | 3.93 |
| MW | 69,000 | 71,000 | 64,000 | 47,000. |

The average molecular weight (MW) was determined by determining the relative viscosity of a 0. 1% by weight pectin solution in the presence of sodium hexamethaphosphate (sequestrant). The determination was effected by introducing into a beaker provided with a stirring magnet about 90 g sodium hexamethaphosphate solution formed by dissolving 20 g sodium hexamethaphosphate in 200 ml ion exchanged boiled water and having a pH value of 4.5. 100 mg pectin washed with acid were added while stirring and the stirring was continued until the pectin had been totally dissolved. Then further sodium hexamethaphosphate solution was added until a total amount of 100.0 g had been added. The solution thus formed was filtered and 5.00 ml of the solution were introduced into a commercially available (Silber Brand No. 111) viscosimeter placed in a water bath maintained at a temperature of $25^\circ C \pm 0.3^\circ C$ for 15 minutes. At least 5 measurements of the discharge time for each solution were made and the average of the measurements was calculated.

The relative viscosity is calculated on the basis of the formula:

$$\eta_r = \frac{(t_o - \frac{K}{t_o})}{(t_h - \frac{K}{t_h})}$$

wherein $t_o$ and $t_h$ are discharge times for the pectin solution and the sodium hexamethaphosphate solution, respectively, and wherein

$$K = \frac{Q \cdot t_v^2}{Q + (0.226 \cdot L \cdot t_v)}$$

wherein Q is the volume of the bulb in $cm^3$, L = the length of the capillary tube in cm and $t_v$ is the discharge time for water in seconds.

The mocular weight is then calculated based on the formula:

$$M = 1.277 \cdot 10^6 (\eta_r^{1/6} - 1) \text{ g/mole,}$$

and the calculated value is rounded off to the closest multiple of 1000.

The DE and DA values were determined by methods described in "Food Chemicals Codex 3rd edition", pp. 215-217, National Academy Press, Washington D.C., 1981.

b) Preparation of solutions.

The following basic composition was used:

|  | I |  |
|---|---|---|
| Gum | 40 | g |
| Water | 450 | - |
| Liquorice powder | 31 | - |
| Ammonium chloride | 26.5 | - |
| Trisodiumcitrate, $2H_2O$ | 4.5 | - |
| Saccharose | 246 | - |
| Glucose syrup (84% solids), 40 DE | 357 | - |
|  | 1155 | g. |

By increasing the concentration of gum to 60, 80, 100, 120 and 150 g, respectively, and by reducing the contents of saccharose and glucose syrup five further compositions which in the following are designated II, III, IV, V and VI were obtained.

The water was heated to 80-85°C and transferred to a kitchen blender. The gum was introduced into the blender and the mixture stirred for 10 minutes so as to dissolve the gum. The solution was heated to 95°C, and a dry mixture of liquorice powder, ammonium chloride, trisodiumcitrate, $2H_2O$ and sugar was added. After a period of about 5 minutes, the added components had been dissolved. Subsequently, the glucose syrup was added while stirring. Finally, the dry matter content (65%), was controlled and the pH value was measured.

c) Preparation of pastilles.

A tray was filled with wheat flour which was uniformly distributed over the tray. Depressions having a shape corresponding to that of the desired pastilles were formed in the layer of the flour with a template. A pastille forming solution of a temperature of about 66°C was introduced in each depression in an amount of about 1 g dry matter. After the moulding operation had been completed, the tray was placed in a dryer and the moulded pastilles were dried at 72°C for 40-48 hours under forced air circulation. The pastilles thus formed had a diameter of 16 mm and a thickness of 3-4 mm.

A suitable number of pastilles were weighed and subsequently dissolved in water at a temperature of 60-65°C, whereafter a refractometer measurement was effected. The dry matter content of the pastilles was determined based on the weight results and the refractometer measurements.

d) Evaluation of moulding conditions and the organoleptic properties of the pastilles.

When moulding pastilles, it is important that the supply of solution to the moulds (cavities) used can be stopped momentarily without tail formation. The formation of tails after discontinuing the supply of solution during the moulding operation was observed and registered.

The pastilles prepared were dried to a dry matter content of 94-96% and were subjected to an organoleptic evaluation by a panel and at the same time the pastilles were compared with reference pastilles prepared by using gum arabic as the sole gum and form a solution having the following composition:

| Gum arabic | 350 | g |
|---|---|---|
| Water | 425 | - |
| Liquorice powder | 31 | - |
| Ammonium chloride | 26.5 | - |
| Trisodiumcitrate, $2H_2O$ | 4.2 | - |
| Sugar | 107 | - |
| Glucose syrup (84% dry matter), 40 DE | 156 | - |
| | 1100 | g. |

In the organoleptic appraisal the following properties were evaluated:

1) Whether the pastilles could be broken by the fingers,

2) the hardness/softness of the pastilles compared with that of the reference pastilles and the possibility of making them break when they are biten,

3) the elastic properties of the pastilles after having attained the temperature of the mouth, and more particularly (a) whether the pastilles can be bent between the teeth without cracking, (b) whether it is possible to bite through the pastilles with the front teeth, (c) whether the pastilles adhere to the teeth when they are chewed and (d) whether the pastilles are smooth when being sucked,

4) the liberation of flavours from the pastilles and

5) the solubility of the pastilles in the mouth when they are sucked and compared with that of the reference pastilles.

(e) Results.

a) Four solutions prepared in the manner described above and by using composition I, i.e. with a concentration of gum of about 4% were prepared. The gum used were pectins B, C, D and for comparison purposes a non-amidated pectin, G, with a degree of esterification of 70.3% and an average molecular weight of 60,000.

The viscosity obtained will appear from the following table:

| | Pectin | Gum, % | DA, % | Viscosity, mPa.s (cP) |
|---|---|---|---|---|
| Solution No. 1 | B | 4 | 8.0 | 2582 |
| Solution No. 2 | C | 4 | 10.9 | 2760 |
| Solution No. 3 | D | 4 | 14.5 | 2950 |
| Solution No. 4 | G | 4 | 0 | 7810. |

As will appear from the above table, the viscosity decreases substantially when using amidated pectin instead of non-amidated pectin while the viscosity increases with increasing degree of amidation. The reason probably is that the $Ca^{++}$ reactivity increases with increasing amide concentration and this results in an increasing gelling.

The taste panel found that the hardness of the pastilles increased with increasing degree of amidation. The pastilles were somewhat softer than the reference pastilles but exhibited essentially the same solubility in the mouth. All pastilles could be broken with the fingers.

b) A further solution was prepared in the above mentioned manner and by using composition II and with pectin E in a higher concentration, viz. about 6%.

The result obtained will appear from the following table:

| Pectin | Gum, % | DA, % | Viscosity, $mPa.s$ (cP) |
|---|---|---|---|
| Solution No. 5 | E | 6 | 12.6 | 2380. |

By comparing the viscosity of the above mentioned solution with that of the above mentioned solutions 1-3 it appears that the viscosity can be maintained at an acceptable level by using a relatively large amount of gum with a relatively high degree of amidation when the pectin has a lower average molecular weight.

Pastilles prepared from solution No. 5 were evaluated by the panel who found them relatively hard and exhibiting essentially the same solubility in the mouth as the reference pastilles. Organoleptically, the pastilles obtained from solution No. 5 were similar to the reference pastilles.

c) Two solutions were prepared by using compositions II and V and pectin E. One solution, solution No. 6, contained 6% pectin and 6% gelatine, and the other, solution No. 7, 6% pectin E.

The viscosities obtained will appear from the following table:

| | Gum | Viscosity, $mPa.s$ (cP) |
|---|---|---|
| Solution No. 6 | 6% pectin E + 6% gelatine | 2500 |
| Solution No. 7 | 6% pectin E | 2480. |

As will appear from the above table, the viscosity does not change substantially when gelatine is added.

The taste panel found that pastilles obtained from solution No. 6 were substantially softer than pastilles obtained from solution No. 7. The solubility in the mouth was essentially the same, and pastilles obtained from both solutions could be broken with the fingers.

Thus, it is possible to reduce the hardness of pastilles based on an amidated pectin by addition of gelatine.

d) A solution, No. 8, having the following composition were prepared for use in the preparation of fruit pastilles:

| | |
|---|---|
| Pectin C | 40.0 g |
| Water | 383.0 ml |
| Trisodiumcitrate, $2H_2O$ | 1.0 g |
| Sugar | 274.0 g |
| Glucose syrup (84% dry matter) | 397.0 g |
| Lemon flavour | 0.3 ml |
| Tartrazin solution | 0.5 ml |
| Citric acid solution, 50% w/v | 4.2 ml |
| Total | 1.100 g |

pH = 3.75.

The solution was prepared as described above.

The moulding of the fruit pastilles was effected at 65° C with a dry matter content of 65%. The viscosity was 3161 MPa.s (cP) but no tail formation was observed, and the moulding proceeded without problems.

In the organoleptic evaluation no significant differences with respect to texture were observed by comparing the fruit lozenges with the pastilles prepared from solution No. 2.

e) In order to prepare sugar-free pastilles, i.e. pastilles containing sorbitol instead of glucose syrup and sugar, a further solution, No. 9, having the following composition was prepared:

| | |
|---|---|
| Pectin B | 40.0 g |
| Water | 450.0 ml |
| Liquorice powder | 31.0 g |
| Ammonium chloride | 26.5 g |
| Trisodiumcitrate, $2H_2O$ | 4.5 g |
| Sorbitol | 546.0 g |
| Sodium carbonate | 2.0 g |
| Total | 1,100.0 g. |

pH = 5.98.

The solution was prepared in the same manner as described above in connection with sugar containing pastilles.

The viscosity of the solution was 1229 MPa.s (cP). The moulding was carried out at 65° C and a dry matter content of 65%.

In order to compare the pastilles thus prepared with sugar-free pastilles based on the use of gum arabic, a further solution, No. 10, having the following composition was prepared:

| | |
|---|---|
| Gum arabic | 350.0 g |
| Water | 450.0 ml |
| Liquorice powder | 31.0 g |
| Ammonium chloride | 26.5 g |
| Trisodiumcitrate, $2H_2O$ | 4.5 g |
| Sorbitol | 236.0 g |
| Sodium carbonate | 2.0 g |
| Total | 1,100.0 g. |

pH = 5.71.

The solution thus obtained had a viscosity of 1967 MPa.s (cP) before moulding.

No tail formation was observed in connection with solutions Nos. 9 and 10.

The taste panel found that pastilles based on solution No. 10 were slightly harder than the pastilles based on pectin B. The two types of pastilles exhibited the same solubility in the mouth. The taste panel observed a difference with respect to texture but had no preference for one type of pastilles over the other.

As will appear from the above results, pastilles containing about 4% by weight of amidated pectin have essentiallly the same properties as pastilles prepared from a solution containing about 35% by weight of gum arabic.

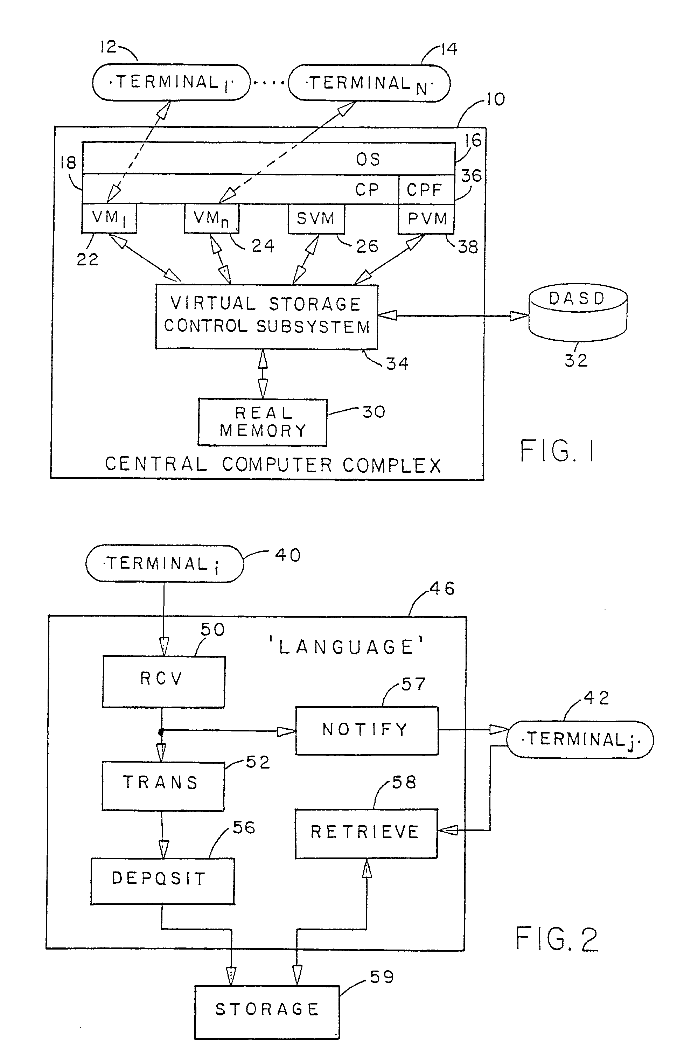

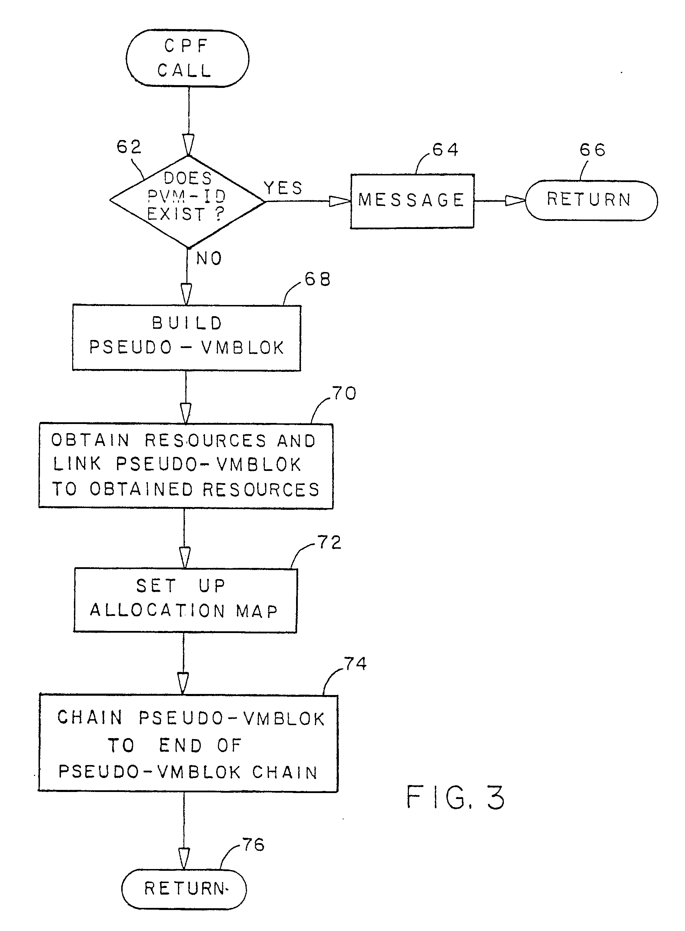

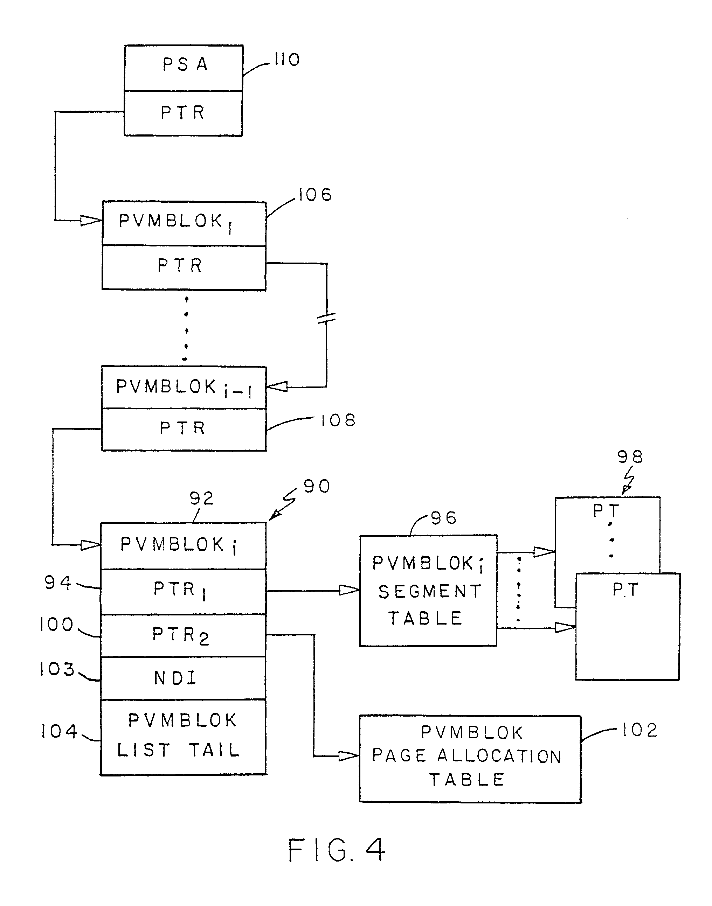

**Claims**

1. A gum based on pectin and for use in confectionery, **characterized** in that it consists wholly or partially of amidated pectin with a degree of amidation of from 5 to 25 %, a degree of esterification of from 50 % to 75 % and an average molecular weight of from 15 000 to 75 000.

2. The gum according to claim 1 characterized in that the average degree of amidation of the pectin is from 5 to 20 %.

3. The gum according to claims 1 or 2, characterized in that the degree of esterification of the pectin is from 55 to 70 %.

4. Confectionery containing a gum based on pectin, **characterized** in that the gum consists wholly or partially of amidated pectin with a degree of amidation of from 5 to 25 %, a degree of esterification of from 50 % to 75 % and an average molecular weight of from 15 000 to 75 000.

5. The confectionery according to claim 4, characterized in that the gum is present in an amount of from 3 to 15 % by weight.

6. The confectionery according to claim 4 or 5, characterized in that the gum also comprises gum arabic, gelatine or a mixture thereof.

**Revendications**

1. Gomme à base de pectine et utilisable en confiserie, caractérisée en ce qu'elle se compose totalement ou partiellement de pectine amidée avec un degré d'amidation de 5 à 25%, un degré d'estérification de 50 à 75% et un poids moléculaire moyen de 15.000 à 75.000.

2. Gomme selon la revendication 1, caractérisée en ce que le degré moyen d'amidation de la pectine est de 5 à 20%.

3. Gomme selon les revendications 1 ou 2, caractérisée en ce que le degré d'estérification de la pectine est de 55 à 70%.

4. Confiserie contenant une gomme à base de pectine, caractérisée en ce que la gomme se compose totalement au partiellement de pectine amidée avec un degré d'amidation de 5 à 25%, un degré d'estérification de 50% à 75% et un poids moléculaire moyen de 15.000 à 75.000.

5. Confiserie selon la revendication 4, caractérisée en ce que la gomme est présente en une quantité de 3 à 15% en poids.

6. Confiserie selon la revendication 4 ou 5, caractérisée en ce que la gomme contient également de la gomme arabique, de la gélatine ou un mélange.

**Ansprüche**

1. Gummi auf Pektin-Basis für die Verwendung in Süßwaren, dadurch **gekennzeichnet,** daß es vollständig oder teilweise besteht aus amidiertem Pektin mit einem Amidierungsgrad von 5 bis 25 %, einem Veresterungsgrad von 50 bis 75 % und einem durchschnittlichen Molekulargewicht von 15 000 bis 75 000.

2. Gummi nach Anspruch 1, dadurch gekennzeichnet, daß der durchschnittliche Amidierungsgrad des Pektins 5 bis 20 % beträgt.

3. Gummi nach Anspruch 1 oder 2, dadurch gekennzeichnet, daß der Veresterungsgrad des Pektins 55 bis 70 % beträgt.

4. Süßwaren, die ein Gummi auf Pektin-Basis enthalten, dadurch gekennzeichnet, daß das Gummi vollständig oder teilweise besteht aus amidiertem Pektin mit einem Amidierungsgrad von 5 bis 25 %, einem Veresterungsgrad von 50 bis 75 % und einem durchschnittlichen Molekulargewicht von 15 000

9

bis 75 000.

5. Süßwaren nach Anspruch 4, dadurch gekennzeichnet, daß das Gummi in einer Menge von 3 bis 15 Gew.-% darin vorliegt.

6. Süßwaren nach Anspruch 4 oder 5, dadurch gekennzeichnet, daß das Gummi außerdem Gummi arabicum, Gelatine oder eine Mischung davon enthält.

FIG. 1

FIG. 2

FIG. 3

FIG. 4